# EUROPEAN PATENT SPECIFICATION

(11) **EP 2 650 997 B1**
(45) Date of publication and mention of the grant of the patent: **10.10.2018**
(21) Application number: 13163440.4
(22) Date of filing: 11.04.2013
(51) Int. Cl.: H02J 3/02

(54) **Power transfer in variable frequency electric power generation systems**
Stromübertragung in Stromerzeugungssystemen mit veränderlicher Frequenz
Transfert de puissance dans des systèmes de génération d'énergie électrique à fréquence variable

(30) Priority: 12.04.2012 US 201213445342
(43) Date of publication of application: 16.10.2013
(73) Proprietor: Hamilton Sundstrand Corporation, Windsor Locks, CT 06096-1010 (US)
(72) Inventor: Novakovic, Nebojsa (Neno), Mukilteo, WA 98275 (US)
(74) Representative: Dehns

(56) References cited:
- EP-A2- 2 230 743
- US-A- 5 729 059

## Description

### BACKGROUND OF THE INVENTION

The present invention relates to power transfer, and more specifically, to fault tolerant bus power transfer for multichannel, variable frequency electric power generation systems.

In aircraft, a Variable Frequency (VF) Electric Power Generation System (EPGS) has three independent alternating current (AC) power channels, including a left engine driven main generator (LGEN), a right engine main generator (RGEN), and an auxiliary power unit (APU) generator (AGEN), where each of the LGEN, RGEN, and AGEN can have access to one or more AC power buses. In the VF EPGS, power transfer is coordinated through a Bus Power Control Unit (BPCU). It is a design feature that each power generation channel has no evidence is an AC power present on associated bus or not.

EP 2230743 A2 discloses an electrical power distribution system in an aircraft. The power supply system comprises at least one power source, a power bus and a distributed control system. The distributed control system comprises a central controller operably coupled to at least one bus module through a data bus. The bus modules include bus controllers that are operable to connect respective power sources to the power bus.

US 5,729,059 A2 discloses an electrical power distribution system, where the bus power control units are configured to send a power ready signal to the generator control units.

### BRIEF DESCRIPTION OF THE INVENTION

According to a first aspect of the present invention, there is a power transfer method in a variable frequency (VF) electric power generation system (EPGS), according to claim 1.

According to a second aspect of the present invention there is provided a variable frequency (VF) electric power generation system (EPGS), according to claim 6.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 schematically illustrates an electric power generation system in which exemplary power transfer methods can be implemented;
FIG. 2 illustrates an electrical interface between each generator control unit and associated generator line contactor;
FIG. 3 schematically illustrates a bus tie contactor electrical interface of the system of FIG. 1;
FIG. 4 illustrates a flow chart for a bus power transfer method in accordance with exemplary embodiments;
FIG. 5 illustrates electric interface between each generator control unit and the and a bus power control unit;
FIG. 6 schematically illustrates an interface between an auxiliary power unit generator control unit and the rest of system of FIG 1;
FIG. 7 illustrates a table of bus tie contactor open/close status in respect to the power transfer from the auxiliary power unit generator when the left generator is active; and
FIG. 8 illustrates a table of bus tie contactor open/close status in respect to the power transfer from the auxiliary power unit generator when the right generator is active.

### DETAILED DESCRIPTION OF THE INVENTION

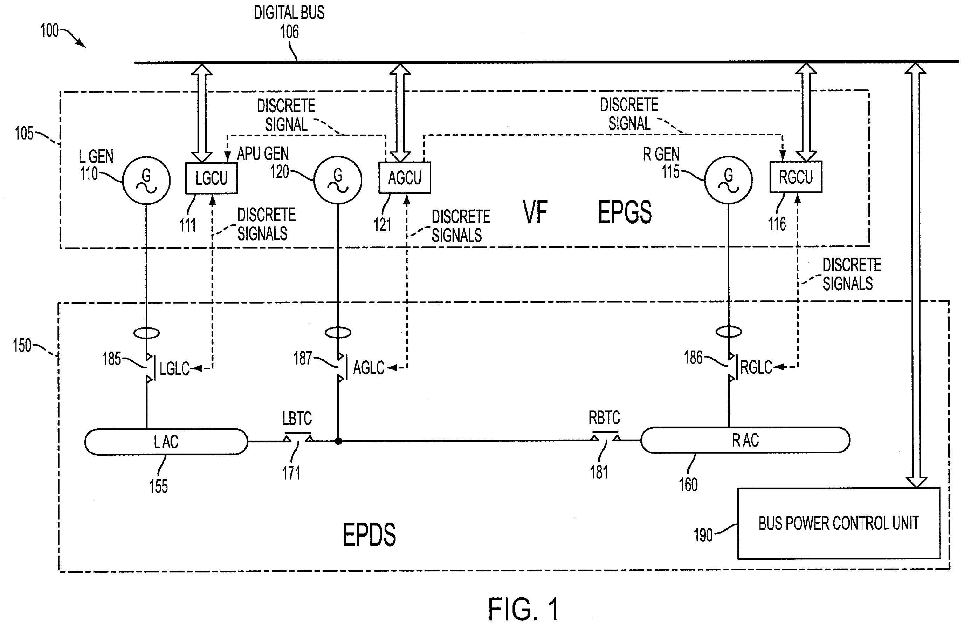

FIG. 1 schematically illustrates an electric power generation system 100 in which exemplary power transfer methods can be implemented. The system 100 includes a VF EPGS 105 having three AC power channels and an electric power distribution system (EPDS) 150. In more detail, the illustrated VF EPGS 100 includes three independent AC power channels including an LGEN 110, an RGEN 115, and an AGEN 120. For control, protection and indication functions, each of the LGEN 110, the RGEN 115, the AGEN 120 has a designated stand-alone generator control unit (GCU) LGCU 111, RGCU 116, AGCU 121, respectively. The EPDS 150 includes two different AC power buses LAC 155, and RLC 160. The EPDS further includes two bus tie contactors (BTC) LBTC 171, and RBTC 181. In one embodiment, with two different BTCs, the two individual AC power busses LAC 155, and RAC 160 can be combined in different configurations to allow power sharing. The EPDS 150 further includes a bus power control unit (BPCU) 190 as a part of power transfer control process described herein. The LGCU 111, the RGCU 116, the AGCU 121, and the BPCU 190 are all connected to a digital bus 106. It can be appreciated that two AC power sources with different frequencies cannot be connected to the same bus.

The EPDS 150 also includes a left generator line contactor (LGLC) 185 located between the LGEN 110 and the LAC bus 155, a right generator line contactor (RGLC) 186 located between the RGEN 115 and the RAC bus 160, an AGEN line contactor (AGLC) 187 connected between the AGEN 120 and BTCs. The LGLC 185 is a 3 phase contactor that connects/disconnects the LGEN 110 from the LAC bus 155. The RGLC 186 is a 3 phase contactor that connects/disconnects the RGEN 115 from the RAC bus 160. The AGLC 187 is a 3 phase contactor that connects/disconnects the AGEN 120 from designated AC buses. It shall be noted that the AGEN 120 has no designated bus, but in one case, the AGLC 187 connects/disconnects the AGEN 120 from the rest of aircraft electric network.

As described herein, the LGEN 110 and the RGEN 115 have designated AC buses, the LAC bus 155, and the RAC bus 160, respectively, while the AGEN 120 is connected to one or both buses (LAC bus 155, and/or the RAC bus 160) through the BTCs, LBTC 171, and RBTC 181 which are used for the aircraft electric power transfer. In one embodiment, where each channel in the system 100 has an independent power transfer process, if two or more VF power sources are connected to the same AC Bus (e.g., the LAC bus 155, and the RAC bus 160), a significant damage to the generators (e.g., the LGEN 110, the RGEN 115 and the AGEN 120) can occur. As such, a fault tolerant bus power transfer protocol is included in respective GCUs (e.g., the LGCU 111, the RGCU 116, the AGCU 121). The fault tolerant bus power transfer protocol is based on communication between each of the LGCU 111, the RGCU 116, the AGCU 121, and the BPCU 190. If the BPCU 190 has a failure, then the fault tolerant bus power transfer protocol can rely on the status (e.g., open/close) of the BTCs, LBTC 171, and RBTC 181. For example, an open/close BTC status is indicated through pair of auxiliary BTC contacts (one normally open, and one normally closed) which are connected to the respective GCU. In one embodiment, the LGCU 111, and the RGCU 116 have a direct interface with the LBTC 171, and RBTC 181 respectively. The AGCU 121 has no direct interface with the BTCs, LBTC 171, and RBTC 181. As such, the fault tolerant bus power transfer protocol for the AGEN 120 implements communication with main generator power channels. As such as described further herein, the fault tolerant bus power transfer protocol is implemented separately for the LGEN 110 and the RGEN 115, and separately for the AGEN 120.

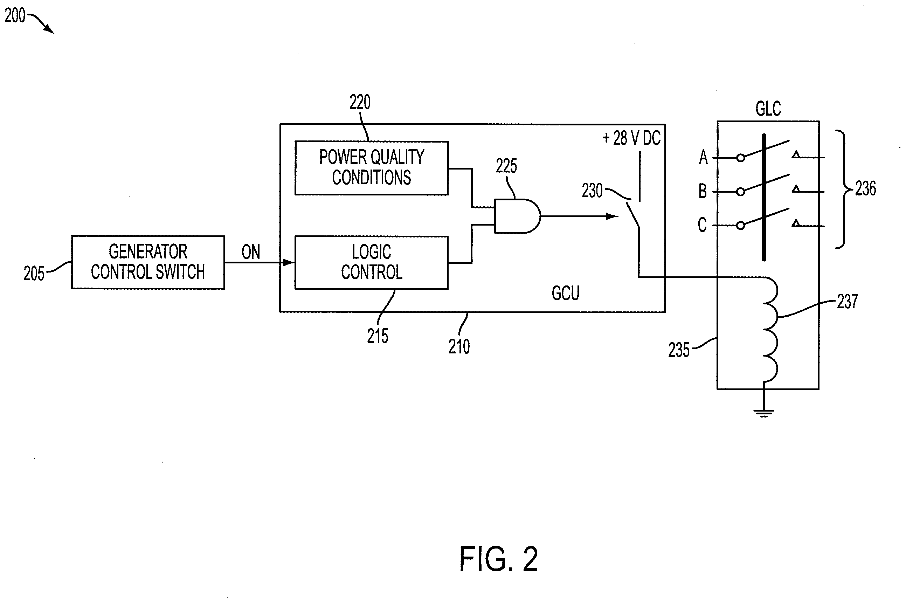

In one embodiment, where there exists failures of the EPGS 105, in order to protect the overall system 100 and to allow reconfiguration with other power sources, each of the LGCU 111, the RGCU 116 and the AGCU 121 in each power channel, has exclusive control over the respective LGLC 185, RGLC 186 and AGLC 187. In on embodiment, each of the LGCU 111, the RGCU 116, and the AGCU 121 provides a 28V/Open discrete signal to control the respective LGLC 185, RGLC 186 and AGLC 187. FIG. 2 illustrates a circuit portion 200 of the system 100 of FIG. 1. The portion 200 includes a generator control switch (GCS) 205 connected to a respective GCU 210 (e.g., any of the LGCU 111, the RGCU 116 and the AGCU 121) through logic control 215. The logic control is "anded" with a power quality conditions module 220 through an "AND" gate 225. The 28V/Open discrete signal controls a switch 230 to a GLC 235 (e.g., any of the LGLC 185, the RGLC 186, and the AGLC 187). The GLC 235 includes a switching three phase contacts 236 and solenoid 237. In one embodiment, the high side of the solenoid 237 is connected to the GCU 210, and the low side of the solenoid 237 is connected directly to ground.

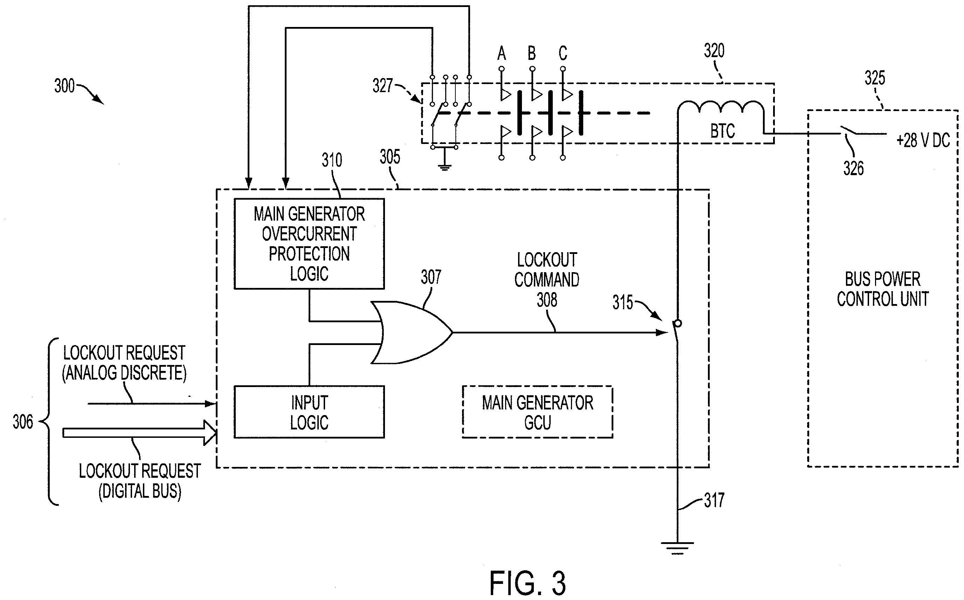

In one embodiment, to maintain independence among the power sources, and to protect the generators LGEN 110, RGEN 115 and AGEN 120 from electric energy coming from an opposite AC Bus, or wiring faults, the LGCU 111, the RGCU 116 and the AGCU 121 in each power channel has partial control of associated BTCs. FIG. 3 schematically illustrates a BTC electrical interface 300 of the system 100 of FIG. 1. FIG. 1 schematically illustrates that a GCU 305 such as the LGCU 111, and RGCU 116 of FIG. 1 is configured to receive a lockout request logic signal 306 that can be logically combined with protection logic 310 as described further herein. As illustrated, a logic "OR" 307 generates a lockout command logic output 308 that can control switch 315 to BTC 320, such as the LBTC 171, or RBTC 181, of FIG. 1. The BTCs 320 are connected to a BPCU 325 such as the BPCU 190 of FIG. 1. The BTC 320 is connected to the BPCU 325 via switches 326. FIG. 3 illustrates that BTC 320 can be switched ON and OFF from the BPCU 325 but only switched OFF from the associated GCU 305. An Open/Close status of the each BTC is indicated to associated GCUs through a pair of auxiliary contacts 327.

In one embodiment, the lockout command 308 is set TRUE if any of the EPGS conditions from the protection logic 310 are TRUE. When lockout command 308 is FALSE, the GCU 305 is providing a ground state to the BTC 320. Setting lockout command 308 causes the GCU 305 to inhibit (lockout) the closure of the BTC 320 in order to isolate associated AC Bus.

In one embodiment, LGCU 111 and RGCU 116 are continuously monitoring two auxiliary contacts of its associated BTC. The AGCU 121 has no direct interface with any of the BTCs and no interface with any BTC auxiliary contacts. An open/close BTC status is communicated from the LGCU 111 and the RGCU 116 to the AGCU 121 through the digital communication bus 106. If the BTC lockout is required by the AGCU 121, the request for the lockout is communicated through combination of analog discrete and digital bus signals: one pair for the LGCU 111 and one pair for the RGCU 116. Once either the LGCU 111 or the RGCU 116 receives a BTC lockout request signals from the AGCU 121, a lockout command is issued and the associated BTC is opened.

As described herein, in the system 100 of FIG. 1, a power generation process is independent from power distribution. As such, the LGCU 111, the RGCU 116, and the AGCU 121 have no direct indication if power is present on the other side of the associated GLC. If the associated AC Bus is already powered, the LGCU 111, the RGCU 116, and the AGCU 121 have no visibility of the powered state, and power transfer through the LGLC 185, RGLC 186 or AGLC 187 GLC shall cause GCU protection to trip due to a Sustained Parallel Sourcing condition. In one embodiment, the system 100 includes a bus power transfer method in the respective GCUs to coordinate between the power generation side (i.e., EPGS 105) and the power distribution side (i.e., the EPDS 150) of the system, where the BPCU has visibility of AC buses power status.

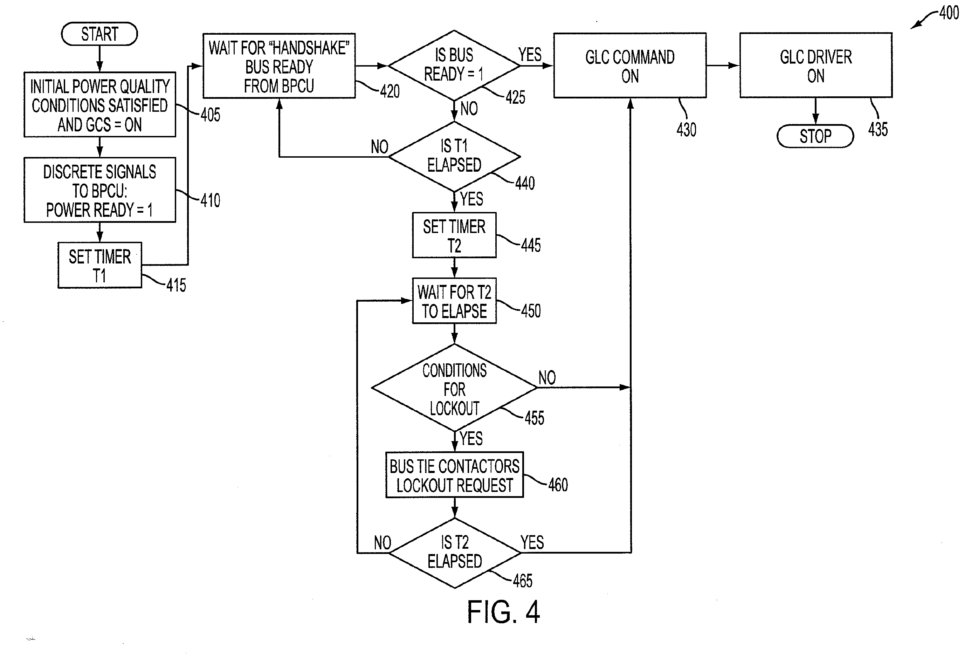

FIG. 4 illustrates a flow chart for a bus power transfer method 400 for the main generators LGEN 110, RGEN 115 in accordance with exemplary embodiments. In one embodiment, power transfer is implemented without adding additional AC power sensing devices to EPGS channels through communication (e.g., a "handshake") between the LGCU 111, the RGCU 116, AGCU 121 and the BPCU 190, where intentions to transfer bus power from the EPGS 105 is acknowledged and confirmed.

At block 405, initial power quality conditions are satisfied, and a GCS (e.g., the GCS 205 of FIG 2) is ON. At block 410, the GCU (e.g., either of the LGCU 111 or RGCU 116 of FIG. 1) generates analog and digital signals "Power Ready" to the BPCU (e.g., BPCU 190 of FIG. 1). At block 415, a GCU signal "Power Ready" signal initiates an internal TIMER T1 to count. At block 420, the GCU waits for a handshake "Bus Ready Acknowledge" from the BPCU. In one embodiment, once the BPCU receives the analog and digital signals "Power Ready," as a request from GCU to apply power to the associated AC bus, and if there is no other power source present on associated AC bus, the BPCU acknowledges the request and responds with analog and digital signals "Bus Ready Acknowledged". As the GCU recognizes that the AC bus is ready through analog and digital signals "Bus Ready Acknowledged" from BPCU at block 425, then at block 430, the GCU generates a GLC Command ON signal at block 430, and activates the GLC driver command at block 435. As such, a bus power transfer with a "handshake protocol" has been completed with confirmation time Tc < T1. In one embodiment, a loss of "Bus Ready Acknowledged" signal from BPCU after the "handshake protocol" has been completed will have no impact on specific power channel operation. However, several events can occur in the bus power transfer protocol as a result of a failure where a "handshake protocol" cannot be completed within T1 time window. With the signal "Power Ready" still valid after T1 time, and associated BTC is open, the GCU activates the GLC at block 430, activates the GLC driver command at block 435, and the bus power transfer is completed in time T = T1.

If associated BTC is not open, and the signal "Power Ready" is still active after T1 time, and there is no acknowledgment from BPCU, the GCU will activate signal "Lockout Command" to open associated BTC, thereby indicating that the bus is not ready at block 425. With T1 elapsed at block 440, the GCU starts a second TIMER T2 at block 445 to count. At block 455, with the conditions for the lockout met, the BTC is locked out at block 460. Once associated BTC is open, and the signal "Power Ready" is valid at block 425, before T2 has elapsed at block 465, the GCU activates GLC at block 430, activates the GLC driver command at block 435 and the bus power transfer is completed in time T1 < T < (T1+T2).

In one embodiment, the "Bus Ready Acknowledged" signal from BPCU takes priority and the GCU activates "GLC Command ON" when confirmation time Tc is T1 < Tc < T2 regardless of BTCs status. As result of "Bus Ready Acknowledged" signal, the GCU resets the signal "Lockout Command" so that BPCU can operate the BTCs if necessary.

In one embodiment, the method 400 can also be applied in the event of two independent failures, in which a first failure is associated with the BPCU causing an absence of the "Bus Ready Acknowledged" signal, and the second failure is associated with the absence of an indication that associated BTC is open, where associated BTC is stuck in a permanent closed position. In this dual failure scenario, each power generation channel is still able to deliver power to designated bus. In this scenario, a bus power transfer is completed only after (T1+T2) time elapsed.

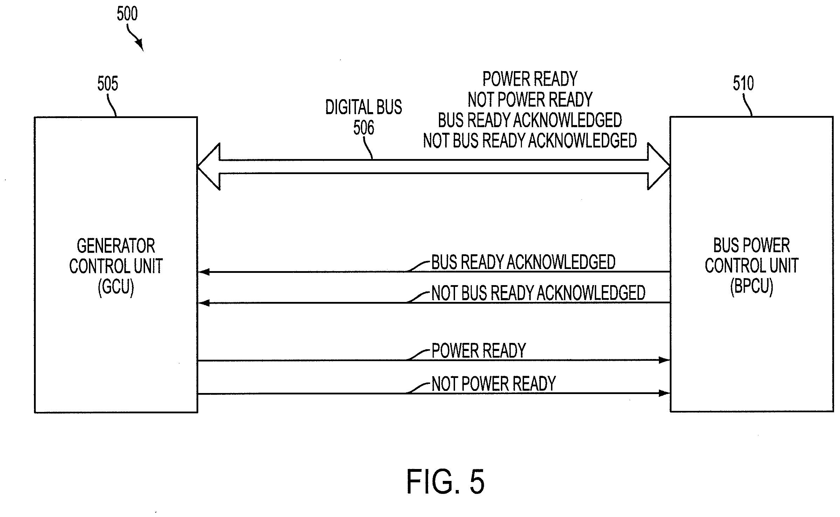

FIG. 5 illustrates a circuit portion 500 of the system 100 of FIG. 1, illustrating an electric interface between a GCU 505 (e.g., either of LGCU 111, the RGCU 116, and AGCU 121 in FIG. 1) and a BPCU 510 (e.g., the BPCU 190 in FIG. 1). In one embodiment, to maintain redundancy in the system 100, several discrete signals are transmitted over a digital bus 506 between the GCU 505 and the BPCU 510. The discrete signals include, but are not limited to: "Power Ready"; "Not Power Ready"; "Bus Ready Acknowledged"; and "Not Bus Ready Acknowledged".

In one embodiment, the methods described herein, such as the method 400 of FIG. 4 combines the "Power Ready" signal generated by logic in the GCU 505, BTC status and signal an "AC Load Bus Ready" signal. Based on a response from the BPCU 510 with discrete signals "Bus Ready Acknowledged", "NOT Bus Ready Acknowledged" and the same set of parameters on the digital bus 506, a signal "AC Load Bus Ready" is generated.

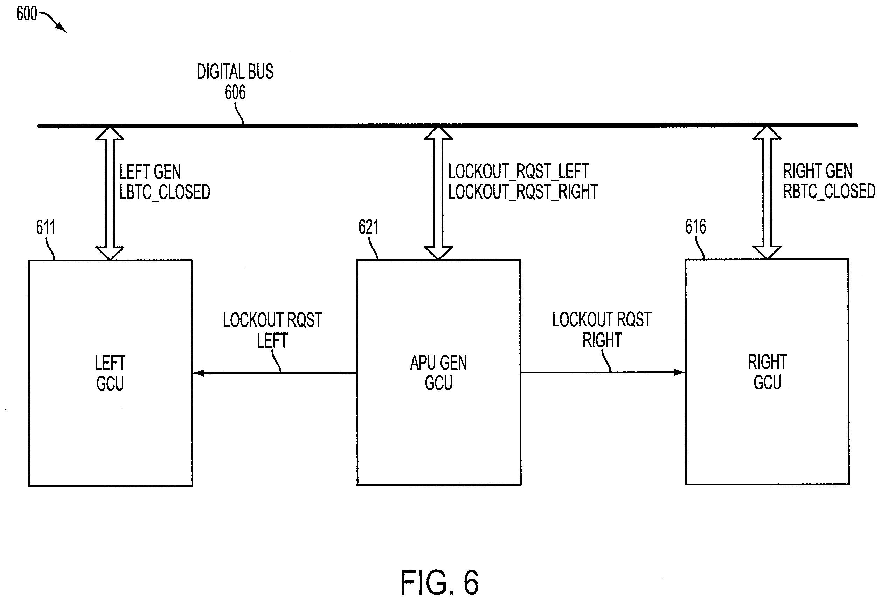

The bus transfer protocol for the AGEN (see AGEN 120 in FIG. 1 for example) is now described. FIG. 6 schematically illustrates an interface 600 of the system 100 of FIG. 1. The interface 600 is between the AGCU 121, the LGCU 111, RGCU 116 and BPCU 190. In one embodiment, for redundancy purposes, the control parameters "Lockout Request Left" and "Lockout Request Right" are transmitted over the digital bus 606 from the AGCU 621 to LGCU 611 and RGCU 616 respectively while "Left Gen", and "Right Gen" are digital bus parameters, transmitted from other power sources to AGCU 621. Those power source parameters indicate that power source is active and present on aircraft electric network. At the same time, as the AGCU 621 has no interface with the BTCs, the BTCs open/close status is transmitted over the digital bus 606 from the LGCU 611 and the RGCU 616 to the AGCU 621.

As described herein, since the AC bus architecture is different for the AGCU 621 , and because the AGCU 621 has not direct interface with the BTCs, a different implementation of a bus power transfer method is implemented with the AGCU 621. In one embodiment, a difference occurs when a single failure eliminates a "handshake protocol" from the BPCU. In that case, if a BTC lockout is requested for the left and right side BTCs, as a preventive measure, it will not bring any benefit to the aircraft network because AGEN has no designated AC bus and activation of the main contactor (i.e., an AGLC) does not provide power to any of aircraft loads. As such, in a single failure case, to allow power transfer to the LAC bus or to the RAC bus (see LAC 155 and RAC 160 in FIG. 1 for example), an AGCU should know is there any other source of energy present on the left or on the right side, so that power transfer can be safe without causing a conflict with other source of energy.

In one embodiment, AGEN power transfer can proceed with a complete "Handshake Protocol" with Tc confirmation time Tc < T1, as described with respect to FIG. 4. As such, this case is common to the main generators and the auxiliary power generator.

In one embodiment, AGEN power transfer can proceed with an absence of "handshake protocol" due to BPCU single failure with no other power sources present. In this case a Bus Power Transfer Protocol will not issue request for a BTC lockout due to the absence of the other power sources. In this case, regardless of BTCs open/closed status, an AGEN will complete power transfer after T1 time.

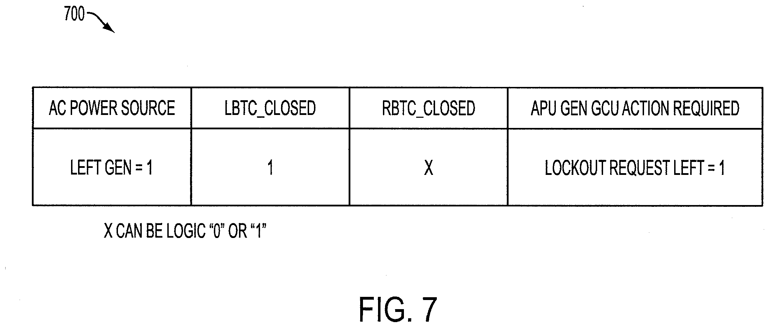

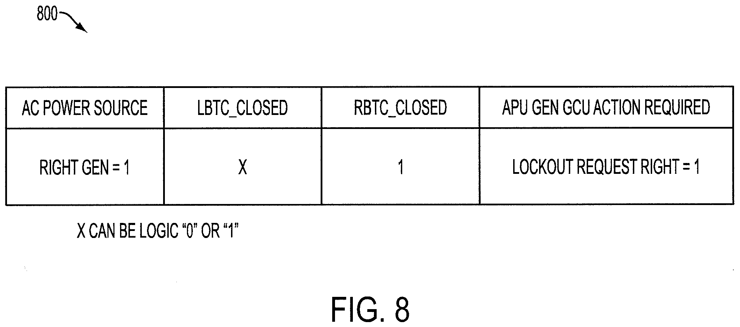

In one embodiment, AGEN power transfer can proceed with an absence of a "handshake protocol" due to BPCU single failure with one or more AC power sources present. In this case, the different BTC arrangements and AC Bus power sources can create multiple configurations which can create a conflict. In one group of configurations, AC power from the main Generators is present on either the LAC bus or the RAC bus (see LAC 155 and RAC 160 in FIG. 1 for example). The status of all two BTCs is arbitrary. One out of four BTCs combinations can cause conflict and in this combination is shown in FIG. 7 that illustrates a table 700 of BTC Closed status with the LGEN power present, which can cause an AGCU lockout request on the left side, and FIG. 8 that illustrates a table 800 of BTC Closed status with the RGEN power present, which can cause an AGCU lockout request on the right side. In both the tables 700, 800 of FIGS. 7 and 8, a Left or Right BTC lockout request is issued respectively. Once the BTC configuration has changed so that Lockout is no longer required, a power transfer is completed within T1 < T < (T1+T2).

In a case that any of the BTCs has a mechanical failure and are stuck closed the AGEN power transfer can proceed after (T1+T2) time expired. In one embodiment, if a power transfer has been completed after T1 + T2 time with one BTC stack closed, creating two independent sources of AC power in a parallel condition, a separate function called Sustained Parallel Source (SPS) protection reacts. As result of SPS protection, a main AGLC is disconnected, and the SPS protection logic will shut down Generator excitation field of the AGEN.

The GCUs and BPCU can be any suitable microcontroller or microprocessor for executing the instructions (e.g., on/off commands) described herein. As such, the suitable microcontroller or microprocessor can be any custom made or commercially available processor, a central processing unit (CPU), an auxiliary processor among several processors, a programmable logic devices (in the form of a microchip or chip set), a macroprocessor, or generally any device for executing software instructions.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Aspects of the present invention are described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

The flowchart and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

In exemplary embodiments, where the methods are implemented in hardware, the methods described herein can implemented with any or a combination of the following technologies, which are each well known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc.

Technical effects include the implementation of a fault tolerant bus power transfer without additional hardware.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A power transfer method in a variable frequency (VF) electric power generation system (EPGS) (105), comprising:
determining that initial power quality conditions for the VF EPGS (105) are satisfied;
sending with a first Generator Control Unit (GCU) (111), or a second GCU (116) or a third GCU (121) a discrete power-ready signal to a Bus Power Control Unit (BPCU) (190), wherein the BPCU (190) is configured to coordinate power transfer within the EPGS (105);
setting a first timer (T1), wherein the first timer (T1) is compared to a first predetermined time period to wait for an acknowledgement signal to the power-ready signal, and in response to the first timer (T1) exceeding the first predetermined time period, opening bus tie contactor (BTC) (171,181) allocated to the associated AC bus (155,160);
receiving at the respective first GCU (111), or second GCU (116) or third GCU (121) an acknowledgement signal from the BPCU (190) in response to the sending of the discrete power-ready signal, the acknowledgement signal being indicative to the respective first GCU (111) or second GCU (116) or third GCU (121) that an associated alternating current (AC) bus (155,160) is ready to receive power generated in the VF EPGS (105);
receiving a bus-ready signal; and
in response to receiving the bus-ready signal, activating a generator line contactor (GLC) driver.

2. The method as claimed in Claim 1 further comprising setting a second timer (T2).

3. The method as claimed in Claim 2 wherein the second timer (T2) is compared to a second predetermined time period to wait for the acknowledgement to the power-ready signal.

4. The method as claimed in Claim 3 further comprising completing a power transfer to the associated AC bus (155,160) at a time greater than the first predetermined time period and less than a sum of the first and second predetermined time periods.

5. A computer program product including a non-transitory computer readable medium storing instructions for causing a computer to implement the power transfer method of any of claims 1 to 9 in a variable frequency (VF) electric power generation system (EPGS) (105).

6. A variable frequency (VF) electric power generation system (EPGS) (105), comprising:
a first generator (110) coupled to a first generator control unit (GCU) (111) and to a first alternating current (AC) bus (155) through a first generator line contactor (GLC) (185);
a second generator (115) coupled to a second GCU (116) and to a second AC bus (160) through a second GLC (186);
an auxiliary power generator (120) coupled to a third GCU (121) and to a plurality of bus tie contactors (BTCs) (171,181), through a third GLC (187), and coupled to at least one of the first and second AC buses (155,160) through the plurality of BTCs (171,181) and
a Bus Power Control Unit (BPCU) (190) in communication with each of the first, second and third GCUs (111,116,121) through a digital bus (106), the BPCU (190) being configured to coordinate power transfer within the EPGS (105),
wherein the first, second and third GCUs (111,116,121) are configured to:
determine that initial power quality conditions the VF EPGS (105) are satisfied;
send a discrete power-ready signal;
receive an acknowledgement signal to the discrete power-ready signal, the acknowledgement signal being indicative that an associated AC bus (155,160) is ready to receive power generated in the VF EPGS;
receive a bus-ready signal;
set a first timer (T1);
in response to receiving the bus-ready signal, activate a GLC driver for at least one of the first, second and third GLCs (185,186,187); and
in response to the first timer (T1) exceeding the first predetermined time period, locking out one of the BTCs (171,181),
wherein the first timer is compared to a first predetermined time period to wait for the acknowledgement to the power-ready signal.

7. The system as claimed in Claim 6 wherein the third GCU (121) is configured to:
set a second timer (T2) that is compared to a second predetermined time period to wait for the acknowledgement signal to the power-ready signal;
in response to the first timer exceeding the first predetermined time period, followed by the second timer exceeding the second predetermined time period, activate lockout condition; and
complete a power transfer to the associated AC bus (155,160) at least one of an expiration of the first predetermined time period, and a time greater than the first predetermined time period and less than a sum of the first and second predetermined time periods.

## Patentansprüche

1. Stromübertragungsverfahren in einem Stromerzeugungssystem (EPGS) (105) mit veränderlicher Frequenz (VF), Folgendes umfassend:
Feststellen, dass anfängliche Stromqualitätsbedingungen für das EPGS (105) VF erfüllt sind;
Senden mit einer ersten Generatorsteuerungseinheit (GCU) (111) oder einer zweiten GCU (116) oder einer dritten GCU (121) eines diskreten Strombereitschaftssignals an eine Busstromsteuerungseinheit (BPCU) (190), wobei die BPCU (190) konfiguriert ist, um eine Stromübertragung innerhalb des EPGS (105) zu koordinieren;
Festlegen eines ersten Timers (T1), wobei der erste Timer (T1) verglichen wird mit einem ersten vorbestimmten Zeitraum, um auf ein Bestätigungssignal zu dem Strombereitschaftssignal zu warten, und als Reaktion auf das Überschreiten des ersten Timers (T1) des vorbestimmten Zeitraums, (171, 181) das Öffnen des Busverbindungsschützes (BTC), das dem zugeordneten Wechselstrombus (155, 160) zugewiesen ist;
Empfangen an der jeweiligen ersten GCU (111) oder zweiten GCU (116) oder dritten GCU (121) eines Bestätigungssignals von der BPCU (190) als Reaktion auf das Senden des diskreten Strombereitschaftssignals, wobei das Bestätigungssignal bezeichnend ist für die jeweilige erste GCU (111) oder zweite GCU (116) oder dritte GCU (121), dass ein zugeordneter Bus für Wechselstrom (AC) (155, 160) bereit ist, um Strom zu empfangen, der in dem EPGS (105) VF erzeugt wird;
Empfangen eines Busbereitschaftssignals; und
als Reaktion auf das Empfangen des Busbereitschaftssignals, Aktivieren eines Treibers für ein Generatorleitungsschütz (GLC).

2. Verfahren nach Anspruch 1, ferner das Festlegen eines zweiten Timers (T2) umfassend.

3. Verfahren nach Anspruch 2, wobei der zweite Timer (T2) verglichen wird mit einem zweiten vorbestimmten Zeitraum, um auf die Bestätigung des Strombereitschaftssignals zu warten.

4. Verfahren nach Anspruch 3, weiter umfassend eine Stromübertragung an den zugeordneten AC-Bus (155, 160) an einem Zeitpunkt größer als der erste vorbestimmte Zeitraum und kleiner als eine Summe des ersten und zweiten vorbestimmten Zeitraums.

5. Computerprogrammprodukt, ein nicht flüchtiges computerlesbares Medium beinhaltend, das Anweisungen speichert, die einen Computer veranlassen, das Stromübertragungsverfahren nach einem der Ansprüche 1 bis 9 umzusetzen in einem Stromerzeugungssystem (EPGS) (105) mit veränderlicher Frequenz (VF).

6. Stromerzeugungssystem (EPGS) (105) mit veränderlicher Frequenz (VF), Folgendes umfassend:
einen ersten Generator (110), der verbunden ist mit einer ersten Generatorsteuerungseinheit (GCU) (111) und mit einem ersten Bus für Wechselstrom (AC) (155) über ein erstes Generatorleistungsschütz (GLC) (185);
einen zweiten Generator (115), der verbunden ist mit einer zweiten GCU (116) und mit einem zweiten AC-Bus (160) über ein zweites GLC (186);
einen Hilfsstromgenerator (120), der verbunden ist mit einer dritten GCU (121) und mit einer Vielzahl von Busverbindungsschützen (BTCs) (171, 181), über ein drittes GLC (187) und der verbunden ist mit mindestens einem von dem ersten und zweiten AC-Bus (155, 160) über die Vielzahl von BTCs (171, 181); und
eine Bus-Stromsteuerungseinheit (BPCU) (190) in Verbindung mit jeder der ersten, zweiten und dritten GCU (111, 116, 121) über einen digitalen Bus (106), wobei die BPCU (190) konfiguriert ist, um die Stromübertragung innerhalb des EPGS (105) zu koordinieren,
wobei die erste, zweite und dritte GCU (111, 116, 121) konfiguriert sind, um:
festzustellen, dass die anfänglichen Stromqualitätsbedingungen für das EPGS (105) VF erfüllt sind;
ein diskretes Strombereitschaftssignal zu senden;
ein Bestätigungssignal zu dem diskreten Strombereitschaftssignal zu empfangen, wobei das Bestätigungssignal bezeichnend ist, dass ein zugeordneter AC-Bus (155, 160) bereit ist, um Strom zu empfangen, der in dem EPGS VF erzeugt wird;
ein Busbereitschaftssignal zu empfangen;
einen ersten Timer (T1) zu setzen;
als Reaktion auf das Empfangen des Busbereitschaftssignals einen GLC-Treiber zu aktivieren für mindestens eines der ersten, zweiten oder dritten GLC (185, 186, 187); und
als Reaktion auf das Überschreiten des ersten Timers (T1) des ersten vorbestimmten Zeitraums, Aussperren eines der BTCs (171, 181),
wobei der erste Timer verglichen wird mit einem ersten vorbestimmten Zeitraum, um auf die Bestätigung des Strombereitschaftssignals zu warten.

7. System nach Anspruch 6, wobei die dritte GCU (121) konfiguriert ist, um:
einen zweiten Timer (T2) festzulegen, der mit einem zweiten vorbestimmten Zeitraum verglichen wird, um auf das Bestätigungssignal zu dem Strombereitschaftssignal zu warten;
als Reaktion auf das Überschreiten des ersten Timers des ersten vorbestimmten Zeitraums, gefolgt von dem Überschreiten des zweiten Timers des zweiten vorbestimmten Zeitraums, die Ausschlussbedingung zu aktivieren; und
eine Stromübertragung an den zugeordneten AC-Bus (155, 160) zu vollenden bei mindestens einem von einem Ablauf des ersten vorbestimmten Zeitraums, und an einem Zeitpunkt größer als der erste vorbestimmte Zeitraum und weniger als die Summe des ersten und zweiten vorbestimmten Zeitraums.

## Revendications

1. Procédé de transfert de puissance dans un système de génération d'énergie électrique (EPGS) à fréquence variable (VF) (105) comprenant :
la détermination que des conditions de qualité d'énergie initiales pour l'EPGS VF (105) sont satisfaites ;
l'envoi avec une première Unité de Commande de Générateur (GCU) (111) ou une deuxième GCU (116) ou une troisième GCU (121) d'un signal discret d'énergie prête discret à une Unité de Commande d'énergie de bus (BPCU) (190) dans lequel la BPCU (190) est configurée pour coordonner un transfert de puissance dans l'EPGS (105) ;
l'établissement d'un premier temporisateur (T1) dans lequel le premier temporisateur (T1) est comparé à une première période de temps prédéterminée pour atteindre un signal d'accusé de réception au signal d'énergie prête, et en réponse au premier temporisateur (T1) dépassant la première période de temps prédéterminée, l'ouverture d'un contacteur de barre omnibus (BTC) (171, 181) attribué au bus CA associé (155, 160) ;
la réception à la première GCU respective (111), ou à la deuxième GCU (116) ou à la troisième GCU (121) d'un signal d'accusé de réception de la BPCU (190) en réponse à l'envoi du signal discret d'énergie prête, le signal d'accusé de réception étant indicatif à la première GCU (111) ou à la deuxième GCU (116) ou à la troisième GCU (121) respectives qu'un bus (155, 160) de courant alternatif associé (CA) est prêt à recevoir de l'énergie générée dans l'EPGS VF (105) ;
la réception d'un signal de bus prêt ; et
en réponse à la réception du signal de bus prêt, l'activation d'une commande de contacteur de ligne de générateur (GLC).

2. Procédé selon la revendication 1, comprenant en outre l'établissement d'un second temporisateur (T2).

3. Procédé selon la revendication 2, dans lequel le second temporisateur (T2) est comparé à une seconde période de temps prédéterminée pour attendre l'accusé de réception du signal d'énergie prête.

4. Procédé selon la revendication 3, comprenant en outre l'achèvement d'un transfert de puissance au bus CA associé (155, 160) à un temps supérieur à la première période de temps prédéterminée et inférieur à une somme de la première et de la seconde périodes de temps prédéterminées.

5. Programme informatique incluant un support lisible sur ordinateur non transitoire mémorisant des instructions pour amener un ordinateur à mettre en application le procédé de transfert de puissance selon l'une quelconque des revendications 1 à 9, dans un système de génération d'énergie électrique (EPGS) à fréquence variable (VF) (105).

6. Système de génération d'énergie électrique (EPGS) à fréquence variable (VF) (105) comprenant :
un premier générateur (110) raccordé à une première unité de commande de générateur (GCU) (111) et à un premier bus de courant alternatif (CA) (155) par le biais d'un premier contacteur de ligne de générateur (GLC) (185) ;
un second générateur (115) relié à une deuxième GCU (16) et à un second bus CA (160) à travers un deuxième GLC (186) ;
un générateur d'énergie auxiliaire (120) relié à une troisième GCU (121) et à une pluralité de contacteurs de barre omnibus (BTC) (171, 181), par le biais d'un troisième GLC (187), et raccordé à au moins un des premier et second bus CA (155, 160) à travers la pluralité de BTC (171, 181) et
une Unité de commande d'énergie de bus (BPCU) (190) en communication avec chacune de la première, de la deuxième et de la troisième GCU (111, 116, 121) à travers un bus numérique (106), la BPCU (190) étant configurée pour coordonner un transfert de puissance dans l'EPGS (105).
dans lequel la première, la deuxième et la troisième GCU (111, 116, 121) sont configurées pour :
déterminer que des conditions de qualité d'énergie initiales de l'EPGS VF (105) sont satisfaites ;
envoyer un signal discret d'énergie prête ;
recevoir un signal d'accusé de réception du signal discret d'énergie prête, le signal d'accusé de réception étant indicatif qu'un bus CA associé (155, 160) est prêt à recevoir de l'énergie générée dans l'EPGS VF ;
recevoir un signal de bus prêt ;
établir un premier temporisateur (T1) ;
en réponse à la réception du signal de bus prêt, activer une commande GLC pour au moins un des premier, deuxième et troisième GLC (185, 186, 187) ; et
en réponse au premier temporisateur (T1) dépassant la première période de temps prédéterminée, verrouiller un des BTC (171, 181),
dans lequel le premier temporisateur est comparé à une première période de temps prédéterminée pour attendre l'accusé de réception du signal d'énergie prête.

7. Système selon la revendication 6, dans lequel la troisième GCU (121) est configurée pour :
établir un second temporisateur (T2) qui est comparé à une seconde période de temps prédéterminée pour attendre le signal d'accusé de réception du signal d'énergie prête ;
en réponse au premier temporisateur dépassant la première période de temps prédéterminée, suivi par le second temporisateur dépassant la seconde période de temps prédéterminée, activer la condition de verrouillage ; et
compléter un transfert de puissance au bus CA associé (155, 160) au moins à l'une de l'expiration de la première période de temps prédéterminée, et à un temps supérieur à la première période de temps prédéterminée et inférieur à une somme des première et seconde périodes de temps prédéterminées.
